Europäisches Patentamt

European Patent Office

Office européen des brevets

(11) Publication number: **0 078 115**
**B1**

(12) **EUROPEAN PATENT SPECIFICATION**

(45) Date of publication of patent specification: **28.05.86**

(51) Int. Cl.⁴: **F 16 D 51/50**

(21) Application number: **82305323.6**

(22) Date of filing: **06.10.82**

(54) Expanding shoe drum brake.

(30) Priority: **26.10.81 US 314621**

(43) Date of publication of application:
**04.05.83 Bulletin 83/18**

(45) Publication of the grant of the patent:
**28.05.86 Bulletin 86/22**

(84) Designated Contracting States:
**DE FR GB SE**

(56) References cited:
**DE-C- 874 861**
**DE-C- 926 953**
**FR-A-2 076 578**
**GB-A-1 025 689**
**US-A-3 096 857**
**US-A-3 136 390**
**US-A-3 497 037**

(73) Proprietor: **EATON CORPORATION**
**100 Erieview Plaza**
**Cleveland Ohio 44114 (US)**

(72) Inventor: **Urban, John Arthur**
**331 Horseshoe Court**
**Plainwell Michigan 49080 (US)**
Inventor: **Sherrick, Peter Lynn**
**9625 Treetop**
**Galesburg Michigan 49053 (US)**

(74) Representative: **Douglas, John Andrew**
**Eaton House Staines Road**
**Hounslow Middlesex TW4 5DX (GB)**

Courier Press, Leamington Spa, England.

## Description

### Background of the Invention
#### *Field of the Invention*

The present invention relates to an expanding shoe drum brake and in particular to an expanding shoe drum brake of relatively light weight construction utilizing lift off type, single web brake shoes.

#### *Description of the Prior Art*

Expanding shoe drum brakes, especially air or hydraulically actuated drum brake systems wherein arcuate brake shoes nonrotatably secured to a portion of a wheeled vehicle are pivotably rotated about an anchor member or members into engagement with a rotating annular brake drum for the purposes of retarding the velocity of the wheeled vehicle by the use of a brake actuating member, such as a displaceable cam element, are well known in the art. The brake actuating member, usually a rotatable cam element or a linear wedge element, is located between the adjacent ends of the pivotal brake shoes and secured to a rotatable cam shaft or a linear actuation shaft, respectively, for translating oscillatory, generally linear motion from a power source, such as an air motor or the like, to the brake shoes.

The actuating member, often in the form of a so-called "S" cam or a wedge, is usually located between cam or wedge followers, often in the form of rollers or the like, rotatably fixed to the brake shoes.

Example of such prior art cam actuated drum brakes may be seen by reference to United States Patents Nos. 3,497,037 and 3,096,857 all of which are hereby incorporated by reference. The precited documents disclose the features set out in the precharacterizing part of claim 1.

While the prior art cam and/or wedge actuated drum brakes, especially the "S" cam type drum brakes, are well received and accepted, such prior art devices were not totally satisfactory in certain situations as they usually were relatively heavy structures utilizing cast iron parts and multiple web brake shoes to attain the required strength and the required relative alignment between the parts thereof. The prior art has also included various attempts to produce relatively lighter weight cam actuated drum brakes by the utilization of relatively lighter weight stamped components. While many of these lighter weight brake assemblies have been highly satisfactory for certain applications and have been well commercially received, the prior art devices were not totally satisfactory for certain applications, such as for example, in use for a relatively smaller cam actuated drum brake for a front steer or drive steer axle. In particular, the prior art designs have been heavier and/or more complicated than is desired to achieve the required strength of the parts and/or to assure that the brake shoe is properly aligned with the brake drum, especially in the disengaged position of the brake. As is well known, maintaining proper brake shoe and brake drum alignment is desirable for reducing the required running clearance to a minimum and thus preserving the maximum of effective stroke of an air motor or the like. Many of the prior art lighter weight brake assemblies have utilized brake shoes having two or more webs and/or brake shoes having full apertures formed therein in which the anchor member or anchor pin was received in attempts to assure that the brake shoes of the drum brake remained properly aligned with the brake drums thereof.

### Summary of the Invention

In accordance with the present invention as set out in claim 1, the drawbacks of the prior art have been overcome to the extent that an improved drum brake, preferably a cam actuated drum brake, is provided having a relatively lightweight structure wherein the various components thereof are rigidly attached and wherein the brake shoe web or webs are retained on a predetermined plane relative to the spider during radial expansion and retraction thereof thereby assuring that the brake shoe friction material remains substantially parallel (on a plane containing the axis of rotation of the drum) to the brake drum thus reducing the required minimum running clearance which must be maintained therebetween.

The above is accomplished by providing a brake shoe having preferably a single web which is pivotably received on an anchor member, preferably a single anchor pin, and is of the liftoff construction, that is the brake shoe is provided with a generally semi-arcuate concave cavity which is pivotably retained on the anchor pin and which may be easily lifted off therefrom for purposes of servicing of the brake. The webs of each of the brake shoes is maintained on the predetermined given plane relative to the brake spider by means of a three point locating system comprising two relatively widely spaced abutment surfaces engageable by one surface of the brake shoe web and a surface on the anchor member engaging the other surface of the brake shoe web. A spring retainer engages the brake shoe web at a point on the other surface thereof which is on the opposite side of a line drawn between the two abutment surfaces engaging the one surface thereof to cause the brake shoes to tend to pivot downwardly along the lines between the two abutment surfaces and upwardly into contact with the surface on the anchor member and to be thus resiliently urged into constant contact with said three points defining said planes. The brake is additionally provided with a stamped spider to which a cam shaft tube is mounted by a unique mounting system comprising three points surrounding said cam shaft in a generally triangular manner. Two of the attachment members comprise bolts having an axis substantially parallel to the axis of the cam shaft and the third point comprises a bolt received in a flange provided in the spider and extending substantially perpendicular to the axis of the cam shaft.

The spring retainer for applying a constant resilient force to the brake shoe webs to maintain said brake shoes in contact with said three locating points is preferably of a unique construction.

Accordingly, it is an object of the present invention to provide a new and improved expanding shoe drum brake of the type utilizing preferably single web brake shoes wherein the web is maintained on a given plane relative to the brake spider in both the applied and retracted positions of the brake shoe and is of the liftoff type construction.

This and other objects and advantages of the present invention will become apparent from a reading of the detailed description of the preferred embodiment taken in connection with the attached drawings.

Brief Description of the Drawings

FIG. 1 is a front view of the expanding shoe drum brake of the present invention.

FIG. 2 is a sectional view taken substantially along the lines 2—2 in FIG. 1.

FIG. 3 is a sectional view taken substantially along the lines 3—3 in FIG. 1.

FIG. 4 is a side view substantially in section taken along substantially the lines 4—4 in FIG. 1.

FIG. 5 is a front view of the spider assembly of the present invention.

FIG. 6 is a side view partially in section of the spider assembly taken substantially along line 6—6 in FIG. 5.

FIG. 7 is a partial view in section taken along substantially the line 7—7 in FIG. 5.

FIG. 8 is a partial view in section taken substantially along the line 8—8 in FIG. 5.

FIG. 9 is a top schematic view of the brake shoe alignment structure of the present invention.

FIG. 10 is a sectional view taken substantially along the line 10—10 in FIG. 9.

FIG. 11 is a view similar to FIG. 2 of an alternate embodiment of the present invention.

Description of the Preferred Embodiment

Certain terminology will be used in the following description for convenience in reference only and will not be limiting. The words "upwardly', "downwardly", "rightwardly", "leftwardly", "clockwise" and "counterclockwise" will designate directions in the drawings to which reference is made. The words "inwardly" and "outwardly" will refer to directions toward and away from, respectively, the geometric center of the device and designated parts thereof. The terms "inboard" and "outboard" will refer to directions toward and away from, respectively, the center of the vehicle to which the brake is mounted. Said terminology will include the words above specifically mentioned, derivatives thereof and words of similar import. The term "brake" as used herein is intended to include various frictional coupling devices such as clutches, brakes and the like.

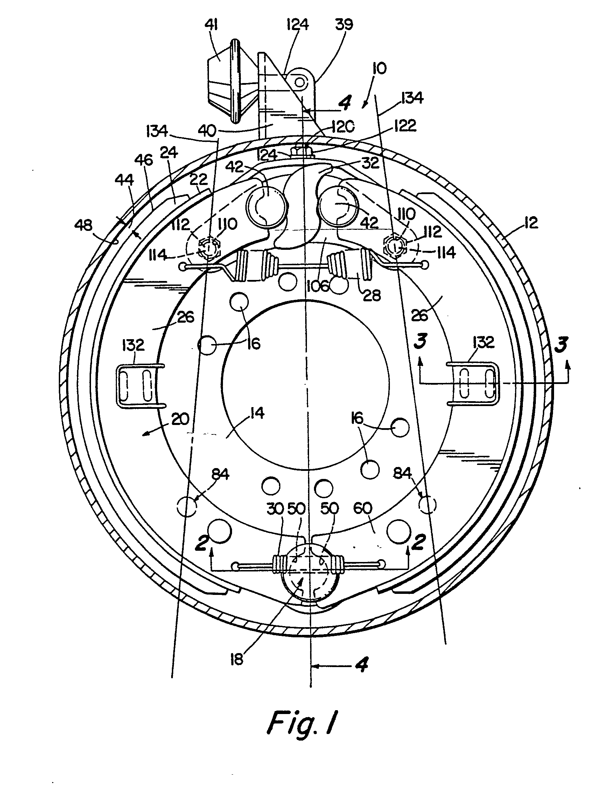

In FIGS. 1—4 there is shown the expanding shoe drum brake assembly 10 of the present invention. For illustrative purposes only, the drum brake assembly 10 illustrated is of the "S" cam type utilizing a single anchor pin. It is understood, however, that the present invention is equally applicable to those expanding shoe drum brake assemblies utilizing other brake actuating means, such as wedge actuators and the like, and is also equally applicable to those drum brake assemblies utilizing other types of anchor structures, such as twin anchor pins or the like. Drum brake assembly 10 comprises a generally annular rotatable drum 12 (shown in section), a brake support member or spider 14 nonrotatably secured to portions of the vehicle by a plurality of suitable fasteners such as bolts (not shown) receivable through bolt circle holes 16, a brake shoe pivot or anchor pin 18 secured to the spider 14, a pair of opposed, generally arcuate, brake shoes 20 including a braking lining support or table 22 and a brake lining 24 of suitable friction material and webs 26, brake shoe return springs 28, brake shoe retention spring 30 and a cam element 32 for causing generally radially outwardly pivotal movement of the brake shoes 20 and brake linings 24 about the pivot or anchor pin 18 and into engagement with the brake drum 12 for braking movement of the vehicle in a known manner.

Also shown in FIGS. 1—4, is a cam shaft 34 to which the cam 32 is nonrotationally fixed or integral therewith. The cam shaft 34 is received within a cam shaft tube 36 which is fixed to the spider 14 in a manner to be discussed in more detail below. The rightward end 38 of the cam shaft 34 is provided with splines or the like for nonrotational receipt of a lever member 39 such as the lever body of an automatic or manual slack adjuster as is well known in the art. A brake actuator support bracket 40 is attached to the cam shaft tube 36 for receipt of a brake actuator 41 such as an air motor or the like. As is well known in the art, the oscillatory motion of the actuator air motor is transmitted to the cam 32 by means of the lever body of the slack adjuster and the cam shaft 34.

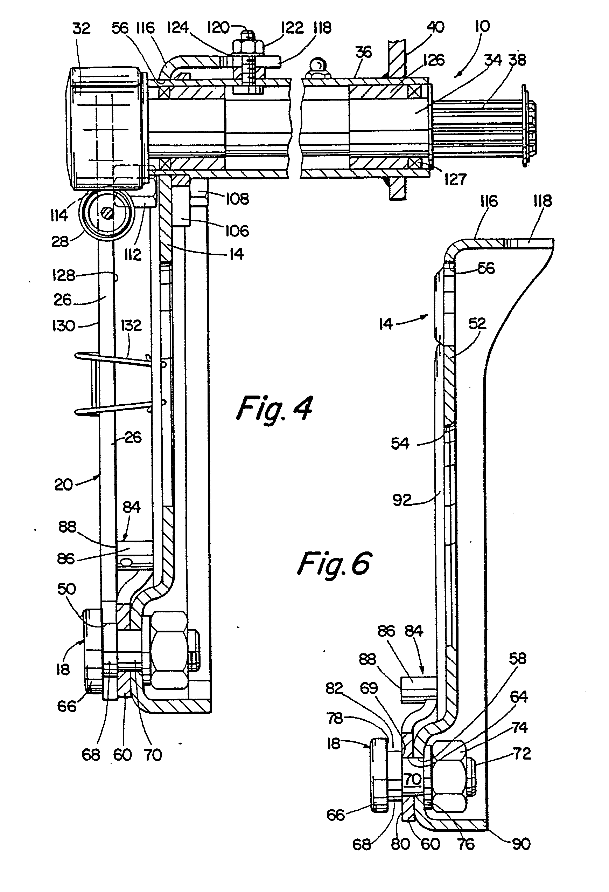

For purposes of simplification of the illustration, the drum 12, slack adjuster 39, air motor 41, table 22 and friction material 24 are not shown in FIG. 4.

The general structure and operation of cam arcuated expanding shoe drum brakes such as has been described briefly above is well known in the art and may be appreciated in further detail by reference to United States Patents Nos. 3,497,037; 3,096,857 and 3,507,369, both of which are hereby incorporated by reference. Briefly, the brake assembly 10 illustrated in FIG. 1 is shown at the at rest or retracted position whereat the brakes are not applied. When it is desired to retard motion of the brake drum 12, usually fixedly attached to the wheels of a vehicle, the brakes are actuated by actuating an actuation member such as a well known air motor or the like which will cause a counterclockwise rotation of cam 32 as seen in FIG. 1. Cam followers 42 are preferably in the form of rollers which are rotationally mounted to the ends of the brake shoe webs 26 and caused to bear against the periphery of the working surfaces of the cam 32 by compression return springs 28 as is well known in the art. Counterclockwise rotation of cam 32 from the position illustrated in FIG. 1 will result in the cam followers 42 and the brake shoes being forced radially outwardly resulting in the generally arcuate brake shoes 20 pivoting radially outwardly about pivot point or brake anchor pin 18 sufficiently to cause brake friction material 24 to frictionally engage brake drums 12. A subsequent clockwise rotation of cam 32 will cause the brake shoes to pivot radially inwardly to the brake release position shown in FIG. 1.

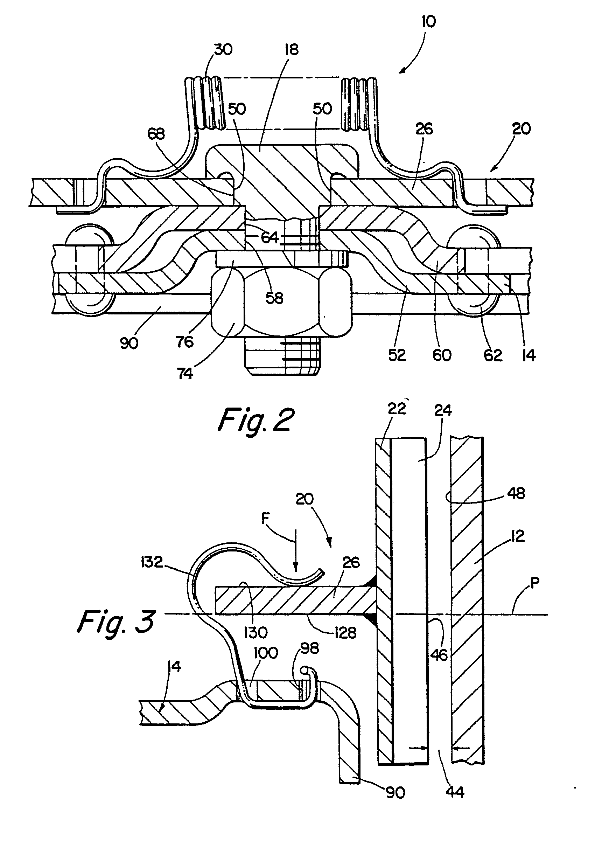

When the brakes are in the released position, such as is shown in FIGS. 1 and 3, it is important that a predetermined minimum radial clearance, or running clearance, 44, be maintained between the brake friction material 24 and the brake drums to prevent excessive wear, etc. It is desirable to maintain the running clearance, also called slack, at a minimum to conserve the effective stroke of the brake actuation air motor as is known in the art. For these reasons, it is important that the outer radial surface 46 of the brake friction material 24 be maintained as parallel (on a plane containing the axis of rotation of drum 12, see FIG. 3) as possible with the inner radial surface 48 of the brake drum 12. It is especially important to maintain this parallel relationship in the at rest position shown in FIGS. 1 and 3. In the applied position the brake drum friction material will tend to conform to the brake drum. If the brake friction material is not maintained parallel with the inner radial surface of the brake drum, it would be necessary to use a greater amount of the limited air motor stroke to assure that all portions of the brake shoe friction material 24 are at least the desired minimum running clearance from the inner radial surface of the brake drum. In the present invention, to maintain the radially outer surface 46 of the friction material 24 as close to parallel as possible with the inner radial surface 48 of the brake drum 12, the webs 26 of the brake shoes 20 are maintained on a predetermined plane, defined by three fixed points on the brake spider, relative to the brake spider in both the applied and released position of the brake shoes. As the webs 26 are usually perpendicular to the tables 22, the webs are usually maintained in a plane P parallel to a plane on the spider and perpendicular to the axis of rotation of the drum 12. It is especially important to positively maintain the predetermined relationship between the brake shoes and the brake spiders in a brake having a single web type of brake shoe as there is a greater tendency of the shoe to tilt about the anchor pin than is present in a brake equipped with two webs. It is also an important feature of the present invention to achieve the above relationship while maintaining the easy removal of the brake shoes for lining and relining purposes by providing a lift off type of brake shoe as will be described in greater detail below. As may be seen, the webs 26 of the brake shoes 20 are provided with a generally semi-annular concave cavity at the end thereof opposite the ends in which the rollers or cam followers are mounted. The concave cavities are pivotably received on the pivot or anchor members 18 and retained in engagement therewith by means of compression retaining springs 30 as is known in the art. Once the brake drum is removed from surrounding the brake shoes, the brake shoes may easily be removed from the spider-anchor pin assembly by simply removing the rollers and the return spring 28 and then pivoting the shoes out of contact with the anchor pin 18.

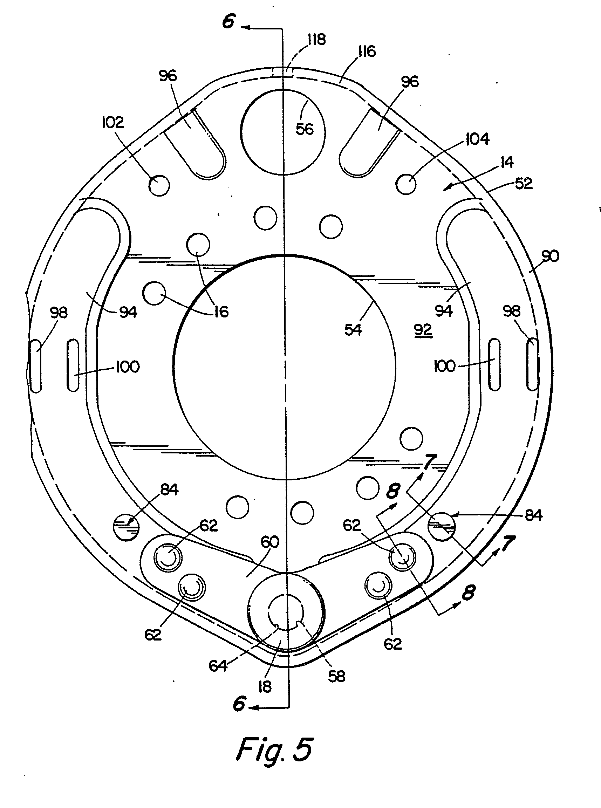

The spider assembly 14 and anchor pin 18 may be seen in greater detail by reference to FIGS. 5—8. The spider assembly 14 includes a stamped spider member 52 having a generally annular aperture 54 therethrough for receipt of an axle shaft or the like. Apertures 16 are provided on a bolt circle of a suitable pattern for attachment of the spider assembly to an axle housing or the like. At its upper end the spider stamping 52 has an aperture 56 therethrough for receipt of the cam shaft tube 36. At its lower end, spider stamping 52 has an aperture 58 therethrough for receipt of the anchor pin 18. A reinforcement plate 60 may be attached to the spider stamping 52 adjacent the opening 58 by means of rivets or other connectors 62 to provide additional strength at this point without requiring additional weight about the entire spider stamping. Reinforcement plate 60 has an aperture 64 generally coaxial with aperture 58 and the spider stamping through which the anchor pin 18 passes. Anchor pin 18 includes an enlarged headed portion 66, a first reduced diameter portion 68, having a larger diameter than the diameter of apertures 64 and 58, a second reduced diameter portion 70 having a diameter slightly greater than the diameters 64 and 58 for a press fit therein and a threaded portion 72 for receipt of a nut member 74. A washer 76 may be interposed the nut 74 and the adjacent surface of spider stamping 52. Washer 76 is preferably a lock washer as is shown. Anchor pin 18 is thus retained to the spider stamping 52 at a reinforced area defined by spider stamping 52 and reinforcement plate 60 by means both of the press fit between the anchor pin section 70 and the aperture 64 and 58 and by means of the tension of nut 74 drawing the shoulder 69 of anchor pin member 68 and section 70 into contact with the reinforcement plate 60. It may be seen that the shoulder 78 between the anchor pin headed portion 76 and reduced shaft portion 68 and the leftward or outboard surface 80 of the reinforcement plate 60 define a groove 82 for pivotal receipt of the arcuate cavities 50 of the spider shoe webs 26. Groove 82 is of an axial distance substantially equal to the axial thickness of the brake shoe web 26 at the arcuate groove 50 thereof.

A barrel shaped rivet 84 is attached to the spider stamping 52. Barrel shaped rivet 84 has an outboard barrel shaped portion 86 having a substantially flat guide or upper surface 88. Surfaces 88 and 78 are substantially perpendicular to the axis of aperture 54. Surface 88 is axially (i.e. along the axis of rotation of drum 12) spaced from shoulder 78 by a distance generally equal to the thickness of the web 26.

A rim 90 extends around the outer periphery of the spider stamping 52 and is bent at a substantially right angle to the face portion 92 of the stamping 52 to extend generally parallelly and inboardly with the axis of aperture 54. Rim 90 will provide additional strength and resistance to distortion for the stamping 52 as is well known in the art. Upraised portions or ribs 94 and 96 may be provided in the stamping 52 for additional strength as is well known in the stamping art. A pair of spaced slots 98 and 100 may be provided in the stamping 52 for purposes to be described in greater detail below. Apertures 102 and 104 are provided in the stamping 52 on either side of aperture 56 for purposes to be described in greater detail below.

Referring again to FIGS. 1—4, it may be seen that the cam shaft tube 36 is provided with a plate 106 welded thereto. Of course, plate 106 may be attached to cam shaft tube 36 in any known manner. Plate 106 is of a generally V-shaped construction somewhat similar to reinforcement plate 60 described below. A pair of bolts 108 extend through apertures 102 and 104 in the spider stamping 52 and complementary apertures 110 provided in the plate 106 and received barrel nuts 112 on the outboard or lefthand side thereof as viewed in FIG. 4. Barrel nuts 112 are of an elongated construction and include a relatively flat upper surface 114 which is substantially parallel and on the same plane as surface 88 of barrel rivet 84. The upper portion 116 of rim 90 is provided with a slot 118 for receipt of the shank of a bolt 120 extending upwardly from cam shaft tube 36. Bolt 120 may pass through the upper periphery of cam shaft tube 36 as is illustrated or may be welded to the upper surface of cam shaft tube 36 as is known in the art. A nut member 122 and a washer 124 are threadably received on the upper end of the shank of nut 120. Washer 124 is of a greater radius than the width of slot 118. Accordingly, it may be seen that the cam shaft tube 36 is attached to the spider 14 at three spaced locations generally equally circumferentially spaced about the axis of the cam shaft 34. Two of the attachment means bolts 108 extend generally parallel to the cam shaft 34 and the third means bolt 120 extends generally perpendicular to the rotational axis of cam shaft 34. Various bushings 126 and seals 127 may be provided for support of cam shaft 34 in cam shaft tube 36.

The above mounting of cam tube 36 to spider 14 provides a relatively rigid three point mounting while not requiring a spider structure extending considerably radially outwardly beyond the cam shaft bore 56. This reduction in required radial dimension is especially significant in front steer and drive steer axles wherein space available for brakes is especially limited.

As may be seen, the web 26 of the brake shoe 20 is located on a plane relative to the spider 14 which is defined by three points, namely surfaces 88 and 114 both of which slidingly engage the inboard surface 128 of the web and shoulder 78 of the headed portion of anchor pin 18 which engages the outboard surface 130 of the web 26. As a radially outer surface 46 of the friction lining 24 is manufactured perpendicular to the web 26, by maintaining the web 26 generally perpendicular to the rotational axis of the drum, the radially outer surface 46 of friction lining 24 will be retained substantially parallel with the radially inner surface 48 of the drum 12. Of course, should the portions of web 26 contacting locating surfaces 78, 88 and/or 114 be axially offset from the positions illustrated, the contact surfaces will be correspondingly axially offset accordingly.

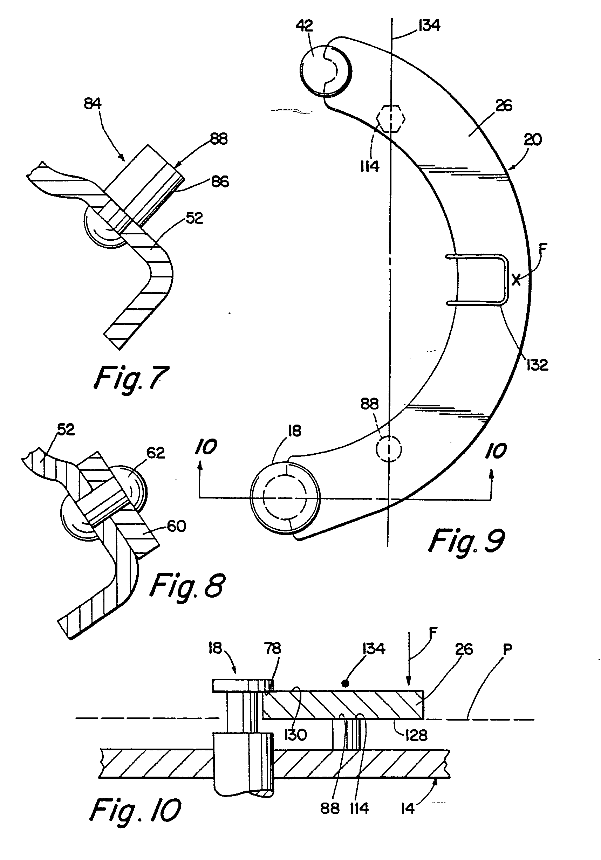

To assure that the web 26 is maintained in contact with the locating or guide surfaces 88, 114 and 78 when the brake is released, when the brake is moving towards engagement and when the brake is engaged, a retaining spring 132 is utilized to resiliently maintain the engagement of the web 26 with the three locating points or surfaces discussed above. Briefly, spring 132 is retained to the spider within slots 98 and 100 as may be seen by FIG. 3 and provides a constant resilient force on the outboard surface 130 of the web 26. As the spring 132 applies a resilient force F on web 26 in the inboard direction, or the rightward direction as seen in FIG. 4, at a point spaced radially outwardly from a line 134 drawn between locating points 114 and 88 the resilient force F of spring 132 will cause the web 26 to be forced rightwardly onto locating points or surfaces 114 and 88 to be maintained in sliding contact therewith and will also cause the web 26 to tend to pivot about line 134 and the radially inwardly portion thereof and be forced outwardly, or leftwardly as seen in FIG. 4, to be maintained in contact with locating surface 78. Thus, by means of the resilient biasing spring 132 and the placement of locating surfaces 114, 88 and 78, the web is constantly resilient urged to be maintained in its desired plane during the brake applying operation as well as when the brake is released. Such locating, schematically illustrated in FIGS. 9 and 10, is provided in a positive resiliently biased manner and with the utilization of relatively simple and lightweight components.

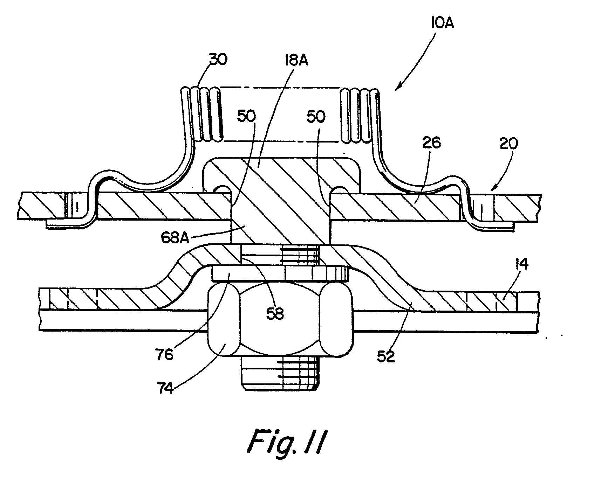

An alternate embodiment 10A of the present invention may be seen by reference to FIG. 11. Embodiment 10A is similar to embodiment 10 described above except that it is a lighter weight, lower cost structure intended for lighter duty applications. As may be seen, the reinforcement plate 60 and the rivets 62 utilized in embodiment 10 have been eliminated. Additionally, for ease of location, an alternate modified anchor pin 18A having an elongated first reduced diameter portion 68A is preferably utilized in place of anchor pin 18. Except for the utilization of the modified anchor pin 18A, and the elimination of plate 60 and rivets 62, the structure and function of embodiments 10A and 10 are identical. This modification, 10A, using identical parts as embodiment 10, except for anchor pin 18A, is possible as location of shoe web 26 relative to spider 14 does not depend upon the plate 60.

It may be seen from the above, that a relatively lightweight expanding shoe drum brake is provided which is relatively simple in construction and which will resiliently, positively maintain the parallelism of the radially outer surfaces of the shoe friction materials and the radially inner surface of the brake drum.

Although this invention has been described in its preferred embodiment with a certain degree of particularity, it is understood such description is by way of example only.

## Claims

1. An expanding shoe drum brake (10) comprising:
a spider member (14);
a selectively displaceable brake actuation (32) means fixed to said spider member;
a pivot structure (18) fixed to said spider member;
a pair of generally arcuate radially outwardly movable brake shoes (20) pivotably supported on said pivot structure, each of said brake shoes carrying a follower member (42) engaged by said actuation means for movement therewith, said actuation means having a first position for causing said shoes to be radially retracted and a second position for causing said shoes to be radially expanded;
each of said brake shoes comprising a web structure (26) comprising at least one web, said web structure defining a first (128) and a second (130) generally parallel opposed surfaces, and a table structure (22) generally perpendicular to said web structure and carrying friction material (24) on the radially outer surface thereof, characterised in that the brake comprises means to locate said web structure on a predetermined plane (P) relative to said spider in both the radially retracted and radially expanded positions thereof, said locating means comprising:
first and second (88 and 114) spaced generally flat guide surfaces fixed to said spider and slidably engageable with said first surface (128) of said web structure, a third generally flat guide surface (78), spaced from and parallel to said first and second guide surfaces, said third guide surface axially spaced from said- first and second guide surfaces by a distance generally equal to spacing between said first and second surfaces on said web structure and slidably engageable with said second surface on said web structure, said third guide surface is not disposed in a straight line (134) drawn from first to said second guide surface, and means (132) resiliently engaging said second surface (130) of said web structure and applying a resilient (F) force on said web structure in the direction toward the first surface thereof, said resilient means engaging said second surface on the opposite side of said line drawn from said first to said second guide surface as said third guide surface whereby said web structure will be constantly resiliently urged into sliding engagement with said first, second and third guide surfaces.

2. The brake of claim 1, wherein said pivot structure is a single anchor pin fixed to said spider and each of said webs are provided with a generally semiarcuate concave cavity (50) pivotably retained on said single anchor pin.

3. The brake of claim 2, wherein said anchor pin comprises a shank portion (68) on which said generally semiarcuate cavities are pivotably received and an enlarged headed portion (66), said third guide surface comprising the shoulder defined by said headed portion and shank portion.

4. The brake of claim 3, wherein said anchor pin additionally comprises a reduced diameter shank portion extending through and received in a press fit in a bore in said spider, a threaded portion extending from said spider in the opposite direction from said headed portion, and a nut threadably received on said threaded portion for applying a compressive force on the spider and the shoulder defined between the shank portion and reduced diameter portion of said anchor pin.

5. The brake of claim 3, wherein said web structure comprises a single web, said first surface of said web comprises the inboard surface of said web and the second surface of said web comprises the outboard surface of said web.

6. The brake of claims 3 or 5, wherein said brake actuation means is a rotatable cam and said follower members are cam follower rollers rotatably carried by said shoes.

7. The brake of claims 3 or 5, wherein said first guide surface is the flat head of a fastener secured to said spider adjacent said actuation means and said second guide surface is the flat head of a fastener secured to said spider at a point circumferentially interposed said first and third guide surfaces.

8. The brake of claim 7, wherein said resilient urging means is a spring carried by said spider at a point circumferentially interposed said first and second guide surfaces.

9. The brake of claims 3 or 5, wherein a generally annular rotatable drum (12) surrounds said friction material, said drum having a generally annular radially inner surface generally parallel on any plane containing the axis of rotation of said drum with said friction material, said first, second and third guide surfaces being generally perpendicular to the rotational axis of said drum.

## Patentansprüche

1. Spreizbare Backen enthaltende Trommelbremse (10) mit einem Bremsankerelement (14); an dem Bremsankerelement befestigten und wahlweise bewegbaren Bremszuspannmitteln (32); einer an dem Bremsankerelement befestigten Schwenkwiderlageranordnung (18) sowie mit einem Paar im wesentlichen bogenförmiger, radial nach außen bewegbarer und schwenkbar an der Schwenkwiderlageranordnung abgestützter Bremsbacken (20), von denen jede ein Nockenfolgeglied (42) trägt, das sich mit den Bremszuspannmitteln bewegt und mit diesen in Eingriff steht, die eine erste Stellung, in der die Bremsbacken radial zurückgezogen werden, und eine zweite Stellung aufweisen, in der die Bremsbacken radial gespreizt werden, wobei jede Bremsbacke eine Steganordnung (26) mit mindestens einem Steg aufweist, und eine erste und eine zweite, einander im wesentlichen parallel gegenüberliegende Flächen (128, 130) bildet, sowie eine Auflageanordnung (22) enthält, die im wesentlichen rechtwinklig zu der Steganordnung verläuft und auf ihrer radial außen liegenden Fläche Reibmaterial (24) trägt, dadurch gekennzeichnet, daß Mittel vorgesehen sind, die die Steganordnung sowohl in der radial zurückgezogenen als auch in der radial gespreizten Stellung in einer vorbestimmten Ebene (P) bezüglich des Bremsankerelements halten und erste sowie zweite, mit Abstand voneinander an dem Bremsankerelement befestigte und im wesentlichen flache Führungsflächen (88, 114) umfassen, die mit der ersten Fläche (128) der Steganordnung in Gleitverbindung stehen, daß die Mittel ferner eine dritte, im wesentlichen ebene Führungsfläche (78) umfassen, die sich parallel zu der ersten und der zweiten Führungsfläche erstreckt und mit Abstand von diesen angeordnet ist, daß die dritte Führungsfläche, die mit der zweiten Fläche der Steganordnung in Gleitverbindung steht, von der ersten und der zweiten Führungsfläche in einem axialen Abstand angeordnet ist, der im wesentlichen gleich dem Abstand zwischen der ersten und der zweiten Fläche der Steganordnung ist und die dritte Führungsfläche nicht auf einer von der ersten zu der zweiten Führungsfläche gezogenen Geraden (134) liegt, daß Federmittel (132) vorhanden sind, die nachgiebig an der zweiten Fläche (130) der Steganordnung angreifen und eine nachgiebige Kraft (F) auf die Steganordnung in Richtung auf der ersten Fläche ausüben, und daß die Federmittel mit der zweiten Fläche der Steganordnung auf derjenigen Seite der von der ersten zu der zweiten Führungsfläche gezogenen Geraden in Eingriff stehen, die der dritten Führungsfläche gegenüberliegt, derart, daß die Steganordnung ständig elastisch in Gleitverbindung mit der ersten, der zweiten und der dritten Führungsfläche gedrückt ist.

2. Trommelbremse nach Anspruch 1, dadurch gekennzeichnet, daß die Schwenkwiderlageranordnung von einem einzigen Ankerzapfen gebildet ist, der an dem Bremsankerelement befestigt ist, und daß jeder der Stege mit einer im wesentlichen halbkreisförmigen konkaven Ausnehmung (50) versehen ist, die schwenkbar auf dem Ankerzapfen aufgenommen ist.

3. Trommelbremse nach Anspruch 2, dadurch gekennzeichnet, daß der Ankerzapfen einen Schaftabschnitt (68), von dem die im wesentlichen halbkreisförmigen Ausnehmungen schwenkbar aufgenommen sind, sowie einen vergrößerten Kopfabschnitt (66) aufweist, wobei die dritte Führungsfläche die von dem Kopfabschnitt und dem Schaftabschnitt gebildete Schulter umfaßt.

4. Trommelbremse nach Anspruch 3, dadurch gekennzeichnet, daß der Ankerzapfen zusätzlich einen Schaftabschnitt mit verringertem Durchmesser enthält, der durch eine Bohrung in dem Bremsankerelement hindurchführt und dort mit Preßsitz aufgenommen ist, sowie einen Gewindeabschnitt aufweist, der sich von dem Bremsankerelement in die bezüglich des Kopfabschnitts entgegengesetzte Richtung erstreckt, und daß zum Erzeugen einer auf das Bremsankerelement sowie eine zwischen dem Schaftabschnitt und dem Schaftabschnitt mit verringertem Durchmesser des Ankerzapfens wirkenden Druckkraft auf den Gewindeabschnitt eine Gewindemutter aufgeschraubt ist.

5. Trommelbremse nach Anspruch 3, dadurch gekennzeichnet, daß die Steganordnung von einem Einzelsteg gebildet ist, und daß die erste Fläche des Stegs die nach innen weisende Fläche des Stegs und die zweite Fläche des Stegs die nach außen weisende Fläche des Stegs umfaßt.

6. Trommelbremse nach den Ansprüchen 3 oder 5, dadurch gekennzeichnet, daß die Bremszuspannmittel ein drehbarer Nocken und die Nockenfolgeglieder Nockenabtastrollen sind, die drehbar an den Bremsbacken sitzen.

7. Trommelbremse nach den Ansprüchen 3 oder 5, dadurch gekennzeichnet, daß die erste Führungsfläche der flache Kopf eines Befestigungsmittels ist, das an dem Bremsankerelement in der Nähe der Bremszuspannmittel befestigt ist, und daß die zweite Führungsfläche der flache Kopf eines Sicherungsmittels ist, das an dem Bremsankerelement an einer Stelle befestigt ist, die in Umfangsrichtung zwischen der ersten und der zweiten Führungsfläche liegt.

8. Trommelbremse nach Anspruch 7, dadurch gekennzeichnet, daß die Federmittel von einer Feder gebildet sind, die von dem Bremsankerelement an einer Stelle gehalten ist, welche in Umfangsrichtung zwischen der ersten und der zweiten Führungsfläche liegt.

9. Trommelbremse nach Anspruch 3 oder 5, dadurch gekennzeichnet, daß eine im wesentlichen ringförmige drehbare Trommel (12) das Reibmaterial umgibt, daß die Trommel eine im wesentlichen ringförmige, radial innen liegende Fläche enthält, die im wesentlichen parallel zu jeder Ebene liegt, die die Drehachse der Trommel um das Reibmaterial enthält, und daß die erste, die zweite und die dritte Führungsfläche im wesentlichen rechtwinklig zu der Drehachse der Trommel ausgerichtet sind.

## Revendications

1. Frein à tambour à sabots écartables (10) comprenant:
— un élément formant armature (14);

— un moyen d'actionnement de frein (32) sélectivement déplaçable et fixé sur ledit élément formant armature;

— une structure formant pivot (18) qui est fixée sur ledit élément formant armature;

— une paire de sabots de frein (20) incurvés dans l'ensemble, déplaçables radialement vers l'extérieur et montés de façon pivotante sur ladite structure formant pivot, chacun desdits sabots de frein portant un élément formant toucheau (42) sollicité par ledit moyen d'actionnement pour se déplacer avec lui, ledit moyen d'actionnement comportant une première position produisant une rétraction radiale desdits sabots et une seconde position produisant un écartement radial desdits sabots;

— chacun desdits sabots de frein comprenant une ossature (26) comportant au moins une âme, ladite ossature définissant une première (128) et une seconde (130) surface opposées généralement parallèles, et un support (22) perpendiculaire dans l'ensemble à ladite âme et portant une garniture de friction (24) sur sa surface radialement extérieure, caractérisé en ce que le frein comprend des moyens pour positionner ladite âme d'ossature dans un plan prédéterminé (P) par rapport à ladite armature dans ses deux positions de rétraction radiale et d'écartement radial, lesdits moyens de positionnement comprenant:

— une première et une seconde (88 et 114) surface de guidage espacées, planes dans l'ensemble, solidaires de ladite armature et pouvant entrer en contact glissant avec ladite première surface (128) de ladite âme, une troisième surface de guidage (78) plane dans l'ensemble, espacée de et parallèle auxdites première et seconde surfaces de guidage, ladite troisième surface de guidage étant espacée axialement desdites première et seconde surfaces de guidage d'une distance généralement égale à l'espacement entre lesdites première et seconde surfaces sur ladite âme et pouvant entrer en contact glissant avec ladite seconde surface de l'âme, ladite troisième surface de guidage n'est pas disposée sur une ligne droite (134) tracée entre la première et la seconde surface de guidage, et des moyens (132) sollicitant élastiquement ladite seconde surface (130) de ladite âme et appliquant une force élastique (S) à ladite âme dans la direction orientée vers ladite première surface, lesdits moyens élastiques entrant en contact avec ladite seconde surface sur le côté opposé de ladite droite tracée entre la première et la seconde surface de guidage comme ladite troisième surface de guidage de façon que ladite âme soit constamment poussée élastiquement en contact glissant contre lesdites première, seconde et troisième surfaces de guidage.

2. Le frein de la revendication 1, dans lequel ladite structure formant pivot est constituée par un seul pivot d'ancrage fixé sur ladite armature et chacune desdites âmes est pourvue d'une cavité dans l'ensemble semi-incurvée et concave (50) qui est retenue de façon pivotante sur ledit pivot d'ancrage.

3. Le frein de la revendication 2, dans lequel ledit pivot d'ancrage comprend une partie de queue (68) sur laquelle lesdites cavités dans l'ensemble semi-incurvées sont reçues de façon pivotante et une partie de tête élargie (66), ladite troisième surface de guidage comprenant l'épaulement défini par ladite partie de tête et ladite partie de queue.

4. Le frein de la revendication 3, dans lequel ledit pivot .d'ancrage comprend additionnellement une partie de queue de diamètre réduit s'étendant·et emmanchée dans un trou ménagé dans ladite armature, une partie filetée s'étendant à partir de ladite armature dans la direction opposée à ladite partie de tête et un écrou vissé sur ladite partie filetée pour exercer une force de compression sur l'armature et l'épaulement défini entre la partie de queue et la partie de diamètre réduit dudit pivot d'ancrage.

5. Le frein de la revendication 3, dans lequel ladite ossature à âme comprend une seule âme, ladite première surface de ladite âme constitue la surface en-abord de ladite âme tandis que la seconde surface de ladite âme constitue la surface hors-bord de ladite âme.

6. Le frein des revendications 3 ou 5, dans lequel ledit moyen d'actionnement de frein est une came tournante et lesdits éléments formant toucheaux sont des toucheaux constitués par des galets portés de façon tournante par lesdits sabots.

7. Le frein des revendications 3 ou 5, dans lequel ladite première surface de guidage est constituée par la tête plane d'un organe de fixation monté sur ladite armature dans une zone adjacente audit moyen d'actionnement et ladite seconde surface de guidage est la tête plane d'un organe de fixation monté sur ladite armature en un point circonférentiellement interposé entre lesdites première et troisième surfaces de guidage.

8. Le frein de la revendication 7, dans lequel ledit moyen élastique de poussée est un ressort porté par ladite armature en un point circonférentiellement interposé entre lesdites première et seconde surfaces de guidage.

9. Le frein des revendications 3 ou 5, dans lequel un tambour rotatif annulaire dans l'ensemble (12) entoure ladite garniture de friction, ledit tambour comportant une surface radialement intérieure et annulaire dans l'ensemble qui est dans l'ensemble parallèle à chaque plan passant par l'axe de rotation dudit tambour, ladite garniture de friction et lesdites première, seconde et troisième surfaces de guidage étant dans l'ensemble perpendiculaires à l'axe de rotation dudit tambour.

0 078 115

Fig. I

# 0 078 115

Fig. 2

Fig. 3

Fig. 4

Fig. 6

*Fig.5*

Fig.7

Fig.8

Fig.9

Fig.10

*Fig. II*